# EUROPÄISCHE PATENTSCHRIFT

(11) **EP 3 174 763 B1**
(45) Veröffentlichungstag und Bekanntmachung des Hinweises auf die Patenterteilung: **26.06.2019**
(21) Anmeldenummer: 15753896.8
(22) Anmeldetag: 27.07.2015
(51) Int. Cl.: B60R 21/264, B29C 67/00, F42B 3/10, B01D 46/00, F42B 3/04, B60R 21/26

(54) **GASGENERATOR FÜR EIN FAHRZEUGINSASSENSICHERHEITSSYSTEM, GASSACKMODUL UND FAHRZEUGINSASSENSICHERHEITSSYSTEM MIT EINEM SOLCHEN GASGENERATOR SOWIE HERSTELLUNGSVERFAHREN**
INFLATOR FOR A VEHICLE SAFETY SYSTEM, AIRBAG UNIT, VEHICLE SAFETY SYSTEM WITH SUCH INFLATOR AND PRODUCTION METHOD
GÉNÉRATEUR DE GAZ POUR SYSTÈME DE PROTECTION DES OCCUPANTS D'UN VÉHICULE, MODULE DE COUSSIN À GAZ ET SYSTÈME DE PROTECTION DES OCCUPANTS D'UN VÉHICULE DE GAZ ÉQUIPÉ D'UN TEL GÉNÉRATEUR DE GAZ AINSI QUE PROCÉDÉ DE FABRICATION

(30) Priorität: 28.07.2014 DE 102014010942
(43) Veröffentlichungstag der Anmeldung: 07.06.2017
(73) Patentinhaber: TRW Airbag Systems GmbH, 84544 Aschau am Inn (DE)
(72) Erfinder: JUNG, Christian, 84453 Mühldorf (DE); HOFFMANN, Achim, 84577 Tüssling (DE); GABLER, Michael, 84453 Mühldorf (DE); TISCHER, Andreas, 84539 Zangberg (DE)
(74) Vertreter: ZF TRW Patentabteilung
(86) Internationale Anmeldenummer: PCT/EP2015/001540
(87) Internationale Veröffentlichungsnummer: WO 2016/015852

(56) Entgegenhaltungen:
- EP-A2- 0 692 411
- WO-A1-2009/146221
- DE-U1- 9 013 129
- DE-U1-202005 007 611
- "3D-Siebdruckverfahren", , 23. April 2009 (2009-04-23), Seiten 1-4, XP055221833, Gefunden im Internet: URL:http://www.ceratechcenter.de/images/st ories/documents/btg_hannover.pdf [gefunden am 2015-10-19]

## Beschreibung

Die Erfindung betrifft einen Gasgenerator gemäß dem Oberbegriff des Patentanspruchs 1. Ferner betrifft die Erfindung ein Gassackmodul und ein Fahrzeuginsassensicherheitssystem mit einem solchen Gasgenerator. Außerdem befasst sich die Erfindung mit einem Verfahren zur Herstellung einer Gasgeneratorkomponente.

Ein Gasgenerator der eingangs genannten Art ist beispielsweise aus der DE 90 13 129 U1 bekannt. Demnach weist der bekannte Gasgenerator ein Außengehäuse und eine Filterstruktur zur Reinigung und/oder Abkühlung eines innerhalb des Außengehäuses freigesetzten Gases auf, wobei die Filterstruktur in das Außengehäuse integriert ist. Konkret ist hier die Filterstruktur aus mehreren Komponenten, wie z.B. einem Grobfilter, einem Drahtkorb, einem Stützgewebe für einen Filter bzw. einem Feinfilter, zusammengebaut und in einen restlichen Bereich des Außengehäuses, der eine Brennkammer definiert bzw. umgibt, durch eine formschlüssige Befestigung (Rollbonden bzw. Bördeln) integriert. Hierbei bildet die Filterstruktur zusammen mit der Brennkammer das Außengehäuse des Gasgenerators. Die EP0692411A zeigt einen Gasgenerator nach dem Oberbegriff des Anspruchs 1.

Nachteilig an einer derartigen Konstruktion ist, dass die Filterstruktur aus mehreren Komponenten gefertigt bzw. vorgefertigt werden muss und in einem weiteren Arbeitsschritt eine Befestigung bzw. Verbindung der Filterstruktur mit dem restlichen Bereich des Außengehäuses (Brennkammer) erfolgen muss.

Im Allgemeinen besteht bei der Entwicklung von Gasgeneratoren ein Bedarf nach einer Vereinfachung der Herstellungsweise und/oder einer Gewichtsreduktion des Gasgenerators. Gleichzeitig soll die Größe des Gasgenerators reduziert werden, ohne dessen Wirksamkeit hinsichtlich der Erzeugung eines ausreichenden Gasvolumen zu beeinträchtigen.

Die Aufgabe der Erfindung besteht darin, einen Gasgenerator für ein Fahrzeuginsassensicherheitssystem anzugeben, der in einfachen, kostengünstigen Herstellungsschritten zu fertigen ist und somit kompakt ist und einen einfachen Aufbau aufweist. Ferner besteht die Aufgabe der Erfindung darin, ein Gassackmodul und ein Fahrzeuginsassensicherheitssystem mit einem solchen Gasgenerator anzugeben. Außerdem ist es Aufgabe der Erfindung, ein Verfahren zur Herstellung von Gasgeneratorkomponenten anzugeben.

Erfindungsgemäß wird diese Aufgabe im Hinblick auf den Gasgenerator durch den Gegenstand des Patentanspruchs 1, im Hinblick auf das Gassackmodul durch den Gegenstand des Patentanspruchs 9, im Hinblick auf das Fahrzeuginsassensicherheitssystem durch den Gegenstand des Patentanspruchs 10 und im Hinblick auf das Herstellungsverfahren durch den Gegenstand des Patentanspruchs 11 gelöst.

Vorzugsweise ist die Filterstruktur mit dem Außengehäuse einstückig hergestellt.

Indem vorzugsweise die Filterstruktur mit dem Außengehäuse einstückig hergestellt ist, kann ein Schritt des Zusammenfügens der Filterstruktur mit dem Außengehäuse sowie weitere vorbereitende Schritte eines vorab Zusammenbaus der Filterstruktur aus mehreren Komponenten entfallen. Der Gasgenerator ist dadurch einfach und kostengünstig herzustellen.

Durch die integrale Ausbildung der Filterstruktur mit dem Außengehäuse wird einerseits das Volumen des Gasgenerators insgesamt reduziert. Andererseits bewirkt die integrierte Kombination aus Außengehäuse und Filterstruktur eine Gewichtsersparnis. Schließlich wird auf diese Weise der konstruktive Aufbau des Gasgenerators vereinfacht, da auf eine zusätzliche Filterstruktur verzichtet werden kann. Dies wirkt sich auch positiv auf den Herstellungsprozess aus, da ein Schritt des Zusammenfügens einer Filterstruktur mit einem Außengehäuse eingespart wird.

Die zuvor genannte Aufgabe wird außerdem durch einen Gasgenerator gelöst, bei dem wenigstens eine Gasgeneratorkomponente, insbesondere ein Außengehäuse und/oder eine Anzündeinheit des Gasgenerators, durch ein 3D-Druckverfahren, insbesondere ein 3D-Siebdruckverfahren, hergestellt sind. Der Gasgenerator, dessen wenigstens eine Gasgeneratorkomponente durch ein 3D-Druckverfahren hergestellt ist, kann außerdem die zuvor genannten Merkmale hinsichtlich der in das Außengehäuse integrierten Filterstruktur aufweisen. In einer besonders bevorzugten Ausführungsform ist vorgesehen, dass das Außengehäuse des Gasgenerators gleichzeitig eine Filterstruktur bildet, wobei das Außengehäuse durch das 3D-Druckverfahren, insbesondere das 3D-Siebdruckverfahren, hergestellt ist.

Das 3D-Druckverfahren ermöglicht eine besonders einfache Herstellung von Gasgeneratorkomponenten, insbesondere wenn die Gasgeneratorkomponenten einen strukturell komplexen Aufbau aufweisen. Dies trifft beispielsweise für das Außengehäuse zu, das gleichzeitig als Filterstruktur ausgebildet ist. Die Herstellung im 3D-Druckverfahren ermöglicht auf besonders einfache Art und Weise die Integration der Filterstruktur in das Außengehäuse. Der strukturelle Aufbau des Außengehäuses bzw. im Allgemeinen der durch das 3D-Druckverfahren hergestellten Gasgeneratorkomponente kann zwar relativ aufwändig sein. Insgesamt ergibt sich dadurch jedoch eine Reduktion der Komplexität des gesamten Gasgenerators, die sich auf die Montage bzw. den Zusammenbau des Gasgenerators positiv auswirkt.

Gemäß einer bevorzugten Ausführungsform des erfindungsgemäßen Gasgenerators weist die Filterstruktur Kanäle, insbesondere labyrinthartige oder mäanderförmige Kanäle, auf, die sich durch das Außengehäuse erstrecken. Die labyrinthartigen oder mäanderförmigen Kanäle bewirken auf einfache und effiziente Weise einerseits eine Filterung von Schlacke oder Partikeln aus dem freigesetzten Gas. Andererseits wird durch die labyrinthartige oder mäanderartige Form der Kanäle eine besonders große Oberfläche bereitgestellt, die von freigesetztem Gas umströmt wird. Auf diese Weise erfolgt ein effizienter Wärmeaustausch zwischen der Filterstruktur und dem freigesetzten Gas, welches auf diese Weise gut abgekühlt wird.

Erfindungsgemäß ist die Filterstruktur in das Außengehäuse integriert bzw. bildet einen integralen Bestandteil des Außengehäuses. Beispielhaft wird ergänzend darauf hingewiesen, dass die Filterstruktur mit dem Außengehäuse einstückig ausgebildet sein kann. Insbesondere kann die einstückige Ausbildung der Filterstruktur mit dem Außengehäuse durch das 3D-Druckverfahren hergestellt werden. Wegen der Einstückigkeit zwischen Filterstruktur und Außengehäuse können insgesamt Materialstärken reduziert werden, ohne strukturelle Nachteile hinnehmen zu müssen. Infolgedessen wird eine Gewichtsreduktion des Gasgenerators erreicht. Gleichzeitig kann das Volumen des Gasgenerators bzw. das Außenvolumen des Gasgenerators reduziert werden, ohne das Innenvolumen des Gasgenerators zu beeinträchtigen.

Erfindungsgemäß weist das Außengehäuse eine zylinderförmige und/oder polygonförmige Umfangswandung auf, in der die Filterstruktur ausgebildet ist. Die zylinderförmige Umfangswandung kann einstückig in das Außengehäuse integriert sein. Beispielsweise kann das Außengehäuse ferner einen Deckel und einen Boden aufweisen, die jeweils mit der Umfangswandung einstückig ausgebildet sind. Vorzugsweise erstreckt sich die Filterstruktur ausschließlich in der Umfangswandung des Außengehäuses.

Die Umfangswandung weist erfindungsgemäß gegenüberliegend angeordnete Plattenelemente mit einer planen Außenfläche und einer gerippten Innenfläche auf. Die gerippten Innenflächen sind einander zugewandt angeordnet. Die gerippten Innenflächen können einen Teil der labyrinthartigen oder mäanderförmigen Kanäle bilden. Insofern bildet die Integration von gerippten Innenflächen in die Umfangswandung eine konstruktive Vereinfachung und dient insbesondere dem kompakten Aufbau des Gasgenerators.

Vorzugsweise weist die Umfangswandung Stegelemente mit beidseitiger Rippenstruktur auf, die zwischen den gerippten Innenflächen der Plattenelemente angeordnet sind. Die Stegelemente, insbesondere deren beidseitige Rippenstruktur, können im Wesentlichen komplementäre Gegenelemente zur gerippten Innenfläche der Plattenelemente bilden. Die beidseitige Rippenstruktur dient ebenfalls zur Erhöhung der Wärmeaustauschoberfläche bei der Durchströmung der Umfangswandung durch ein freigesetztes Gas. Dies erhöht den Abkühlungseffekt.

Ferner können die Stegelemente in Umfangsrichtung versetzt zu den Plattenelementen angeordnet sein und sich jeweils durch Gasaustrittsöffnungen der Umfangswandung erstrecken. Im Allgemeinen kann vorgesehen sein, dass die Umfangswandung Gasaustrittsöffnungen aufweist. Um zu vermeiden, dass freigesetztes Gas unmittelbar durch die Gasaustrittsöffnungen den Gasgenerator verlässt, ohne zuvor gefiltert oder abgekühlt zu werden, ist vorgesehen, die Stegelemente in den Gasaustrittsöffnungen anzuordnen. Dies bewirkt, dass die Stegelemente von dem freigesetzten Gas umströmt werden, so dass eine möglichst große Fläche zum Wärmeaustausch zwischen freigesetztem Gas und Umfangswandung genutzt wird.

Bei einer bevorzugten Ausführungsform des erfindungsgemäßen Gasgenerators greift die Rippenstruktur der Stegelemente zahnstangenartig in die gerippten Innenflächen der Plattenflächen ein. Insbesondere kann die Rippenstruktur derart in die gerippten Innenflächen der Plattenelemente eingreifen, dass einzelne Rippen der Stegelemente und der Plattenelemente durch freigesetztes Gas umströmbar sind. Insbesondere kann zwischen den einzelnen Rippen der Stegelemente und der Plattenelemente ein Abstand vorgesehen sein, der den mäanderförmigen bzw. labyrinthartigen Kanal bildet, durch welchen das freigesetzte Gas beim Durchgang durch die Umfangswandung strömt.

Die Erfindung sieht in bevorzugten Ausgestaltungen vor, dass das Außengehäuse mehrere Ringsegmente aufweist, die koaxial übereinander angeordnet die Umfangswandung bilden. Die Ringsegmente können einstückig miteinander ausgebildet sein. Insbesondere können die Ringsegmente mittels des 3D-Druckverfahrens einstückig aufeinander aufgebaut werden, beispielsweise durch schichtweises Drucken einzelner Materialschichten. Die einzelnen Ringsegmente können auch separat hergestellt und dann zur Umfangswandung zusammengesetzt werden. Im Wesentlichen ist in beiden Alternativen vorgesehen, dass die Umfangswandung durch quer verlaufende Trennböden in mehrere Ringsegmente unterteilbar ist. Die labyrinthartigen bzw. mäanderförmigen Kanäle, die sich durch die Umfangswandung erstrecken, verlaufen vorzugsweise in längsaxialer Richtung des Außengehäuses jeweils zwischen zwei Trennböden. In längsaxialer Richtung können die Kanäle einen geradlinigen Verlauf aufweisen. Die labyrinthartige bzw. mäanderförmige Struktur zeigt sich vielmehr im Querschnitt der Umfangswandung, d.h. bei eine zylinderförmigen Umfangswandung in radialer Richtung.

Die vorliegende Erfindung befasst sich außerdem mit einem Gasgenerator, der zusätzlich eine Verdämmung aufweist, die einstückig mit dem Außengehäuse ausgebildet ist. Der Gasgenerator kann im Allgemeinen ein Außengehäuse umfassen, das Gasaustrittsöffnungen aufweist. Die Gasaustrittsöffnungen sind durch die Verdämmung verschlossen, die einstückig mit dem Außengehäuse ausgebildet ist. Dieser Gasgenerator ist ebenfalls vorzugsweise durch ein 3D-Druckverfahren hergestellt.

Insbesondere die Herstellung durch ein 3D-Druckverfahren ermöglicht die Ausbildung einer einstückig in das Außengehäuse integrierten Verdämmung. Die Aufgabe der Verdämmung besteht darin, Gasaustrittsöffnungen zu verschließen, um das Eindringen von Schmutz und Feuchtigkeit in den Gasgenerator zu verhindern. Damit ist sichergestellt, dass der Gasgenerator auch über einen längeren Zeitraum für einen singulären Einsatz bereitsteht. Das bedeutet, dass der Gasgenerator teilweise mehrere Jahre unbetätigt in einem Fahrzeuginsassensicherheitssystem ruht, bevor der Gasgenerator seine für die Fahrzeuginsassen relevante Sicherheitsfunktion erfüllen muss. Dabei ist es wichtig, dass die Zuverlässigkeit des Gasgenerators gewährleistet bleibt. Neben weiteren Komponenten bildet die Verdämmung einen wesentlichen Aspekt für die Zuverlässigkeit der Funktionsweise des Gasgenerators, indem die Verdämmung das Eindringen von Feuchtigkeit oder Verschmutzung verhindert.

Die Verdämmung kann durch einen Bereich verringerter Wandstärke der Umfangswandung gebildet sein. Ein solcher Bereich verringerter Wandstärke ist in einem 3D-Druckverfahren besonders einfach herstellbar. Dabei ist bevorzugt vorgesehen, dass der Bereich verringerter Wandstärke derart dimensioniert bzw. ausgebildet ist, dass ein im Gasgenerator bzw. Außengehäuse aufgebauter Gasdruck ausreicht, um die Verdämmung bersten zu lassen und den Gasstrom freizugeben. Diese Funktion ist auch zu gewährleisten, wenn die Gasausströmöffnung, wie bei bevorzugten Ausführungsformen der Erfindung vorgesehen ist, durch Stegelemente durchsetzt bzw. blockiert ist, die zur Freigabe des freigesetzten Gases umströmt werden müssen.

Ferner kann in bevorzugten Ausführungsformen der Erfindung vorgesehen sein, dass der Gasgenerator einen Halteflansch aufweist, der einstückig mit dem Außengehäuse ausgebildet ist. Der Halteflansch ist insbesondere einstückig mit dem Außengehäuse durch das zuvor genannte 3D-Druckverfahren hergestellt. Der Halteflansch ermöglicht.die Befestigung des Gasgenerators an weiteren Bauteilen eines Fahrzeugs, beispielsweise an oder in einem Gassackmodul und/oder an einem Lenkradskelett. Der Halteflansch kann sich radial außerhalb der Umfangswandung erstrecken. Insbesondere kann das Außengehäuse zumindest abschnittsweise mit dem Halteflansch ein hutförmiges Querschnittsprofil bilden.

Ein nebengeordneter Aspekt der Erfindung betrifft ein Gassackmodul, insbesondere ein Airbagmodul, mit einem zuvor beschriebenen Gasgenerator. Ferner bezieht sich die Erfindung gemäß einem nebengeordneten Aspekt auf ein Fahrzeuginsassensicherheitssystem, das einen zuvor genannten Gasgenerator und/oder ein zuvor beschriebenes Gassackmodul aufweist.

Die Erfindung schafft außerdem ein Verfahren zur Herstellung einer Gasgeneratorkomponente eines zuvor genannten Gasgenerators und/oder eines zuvor genannten Gassackmoduls, bei dem die Gasgeneratorkomponente mittels eines 3D-Druckverfahrens schichtweise aufgebaut wird. Das erfindungsgemäße Verfahren dient zur Herstellung einer Gasgeneratorkomponente, wobei die Gasgeneratorkomponente Teil eines Gasgenerators und/oder eines Gassackmoduls sind. Erfindungsgemäß sind die Gasgeneratorkomponente ein Außengehäuse und/oder eine Anzündeinheit eines Gasgenerators, das bzw. die mittels eines 3D-Druckverfahrens schichtweise aufgebaut wird.

Die Verwendung eines 3D-Druckverfahrens, insbesondere eines 3D-Siebdruckverfahrens zur Herstellung von Gasgeneratorkomponenten wird ebenfalls explizit offenbart.

Die Vorteile des erfindungsgemäßen Herstellungsverfahrens liegen insbesondere darin, dass der strukturelle Aufbau von Gasgeneratorkomponenten, insbesondere von Einzelbauteilen eines Gasgenerators, komplexer gestaltet werden kann, was beispielsweise die Integration einer Filterstruktur in das Außengehäuse eines Gasgenerators ermöglicht. Ferner können durch das 3D-Druckverfahren Materialien verarbeitet werden, die eine hohe Beständigkeit bei geringem Gewicht aufweisen,

Das 3D-Druckverfahren ermöglicht eine sehr präzise Konstruktion der Gasgeneratorkomponente, so dass eine ausreichende Festigkeit der Gasgeneratorkomponente bei gleichzeitig geringer Masse erreicht werden kann. Das 3D-Druckverfahren ist außerdem gut reproduzierbar, so dass auch über eine gesamte Komponentenserie bzw. Komponentencharge eine hohe Genauigkeit erzielt wird. Darüber hinaus ist das 3D-Druckverfahren gut skalierbar, wodurch sich dieses Herstellungsverfahren gut für die Serienfertigung eignet.

Da das 3D-Druckverfahren ein materialaufbauendes Verfahren darstellt, werden Abfallprodukte, wie sie beispielsweise bei materialabtragenden Verfahren auftreten, vermieden. Das erfindungsgemäße Herstellungsverfahren ist daher nicht nur ökonomisch, sondern auch ökologisch vorteilhaft. Außerdem ermöglicht das 3D-Druckverfahren auch die Herstellung von Kavitäten bzw. Hohlräumen in Bauteilen.

In einer bevorzugten Ausführungsform des erfindungsgemäßen Herstellungsverfahrens ist das 3D-Druckverfahren ein 3D-Siebdruckverfahren. Dieses Verfahren zeichnet sich durch eine besonders hohe Genauigkeit mit einer Auflösung von etwa 100 µm aus.

Das erfindungsgemäße Verfahren kann in bevorzugten Ausgestaltungen die folgenden Schritte umfassen:
- Bereitstellen einer Siebdruckmaske;
- Aufbringen einer druckfähigen Suspension eines Materialpulvers auf die Siebdruckmaske; und
- Erhitzen der druckfähigen Suspension zur Verschmelzung des Materialpulvers.

Der Schritt des Aufbringens einer druckfähigen Suspension eines Materialpulvers auf die Siebdruckmaske kann insbesondere unter Druck bzw. unter Einwirkung eines Drucks erfolgen. Auf diese Weise wird die Materialpulver-Suspension gut durch die Siebdruckmaske gepresst, so dass sich die Suspension strukturiert auf eine zuvor erstellte Schicht abscheidet. Vorzugsweise wird die erste zu druckende Schicht auf einem Substrat abgeschieden, das nach der Verschmelzung des Materialpulvers entfernt wird.

Gemäß einer bevorzugten Ausgestaltung der Erfindung werden wenigstens zwei voneinander verschiedene Materialpulver auf die Siebdruckmaske aufgebracht, so dass zwei Bauteile der Gasgeneratorkomponente, die voneinander verschiedene Materialien aufweisen, in einem gemeinsamen Verfahrensschritt hergestellt werden. Das 3D-Druckverfahren, insbesondere das 3D-Siebdruckverfahren, ermöglicht die Herstellung von komplexen Gasgeneratorkomponenten, die aus mehreren Bauteilen bestehen, wobei die einzelnen Bauteile verschiedene Materialien umfassen. So kann beispielsweise eine Anzündeinheit eines Gasgenerators im 3D-Siebdruckverfahren hergestellt werden, wobei ein erstes Bauteil, das beispielsweise aus einem Quarzsandpulver hergestellt wird, und ein zweites Bauteil, das beispielsweise aus einem Metallpulver hergestellt wird, gleichzeitig durch schichtweises Drucken aufgebaut werden. Auf diese Weise können zwei, ggf. ineinander integrierte, Bauteile aus unterschiedlichen Materialien, beispielsweise Glas und Metall, schichtweise in ein und demselben Verfahrensvorgang aufgebaut werden.

In konkreten Ausgestaltungen des erfindungsgemäßen Herstellungsverfahrens sind die unterschiedlichen Materialpulver ein Metallpulver zur Herstellung elektrisch leitfähiger Bauteile einerseits und ein Quarzsandpulver oder Kunststoffpulver zur Herstellung eines Isolationskörpers andererseits. Die elektrisch leitfähigen Bauteile können beispielsweise Kontaktstifte zur elektrischen Kontaktierung einer Anzündeinheit mit einer Steuereinheit sein. Der Isolationskörper kann beispielsweise aus Glas oder Kunststoff gebildet sein und die elektrischen Kontaktstifte ummanteln, um das Außengehäuse des Gasgenerators von den elektrischen Kontaktstiften oder die Kontaktstifte voneinander zu isolieren.

Die Erfindung wird im Folgenden anhand von Ausführungsbeispielen unter Bezugnahme auf die beigefügten, schematischen Zeichnungen näher erläutert. Darin zeigen
Fig. 1a eine perspektivische Ansicht eines Außengehäuses eines erfindungsgemäßen Gasgenerators nach einem bevorzugten Ausführungsbeispiel;
Fig. 1b eine Detailansicht des Außengehäuses gemäß Fig. 1;
Fig. 2 eine weitere perspektivische Ansicht des Außengehäuses gemäß Fig. 1, wobei die innere Struktur des Außengehäuses erkennbar ist;
Fig. 3 eine Detailansicht des Außengehäuses gemäß Fig. 2;
Fig. 4 eine Querschnittsansicht eines erfindungsgemäßen Gasgenerators nach einem weiteren bevorzugten Ausführungsbeispiel, wobei die Gasaustrittsöffnungen in einem Außengehäuse des Gasgenerators durch eine einstückig mit dem Außengehäuse ausgebildete Verdämmung verschlossen sind;
Fig. 5 eine Detailansicht des Gasgenerators gemäß Fig. 4;
Fig. 6 eine perspektivische Ansicht eines Außengehäuses eines erfindungsgemäßen Gasgenerators nach einem weiteren bevorzugten - Ausführungsbeispiel, wobei ein einstückig mit dem Außengehäuse ausgebildeter Halteflansch vorgesehen ist;
Fig. 7 eine Unteransicht des Außengehäuses gemäß Fig. 6;
Fig. 8 eine Querschnittsansicht einer Anzündeinheit eines Gasgenerators nach einem bevorzugten Ausführungsbeispiel, wobei die Anzündeinheit durch ein 3D-Druckverfahren hergestellt ist; und
Fig. 9 eine Darstellung des erfindungsgemäßen Herstellungsverfahrens nach einem bevorzugten Ausführungsbeispiel.

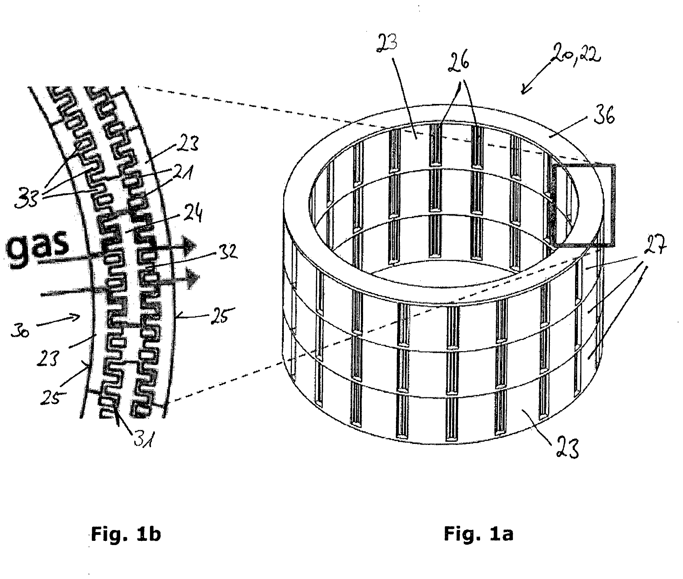

In Figur 1a ist eine perspektivische Ansicht eines Außengehäuses 20 für einen Gasgenerator, speziell für einen pyrotechnischen Gasgenerator, 10 gezeigt. Das Außengehäuse 20 trägt eine integrierte Filterstruktur 30, wobei die Filterstruktur geeignet ist, um innerhalb des Außengehäuses 20 freigesetztes Gas beim Ausströmen aus dem pyrotechnischen Gasgenerator 10 zu kühlen und/oder zu reinigen. Insbesondere können durch die Filterstruktur 30 Schlacke oder Partikel aus dem Gas abgelagert bzw. gefiltert werden.

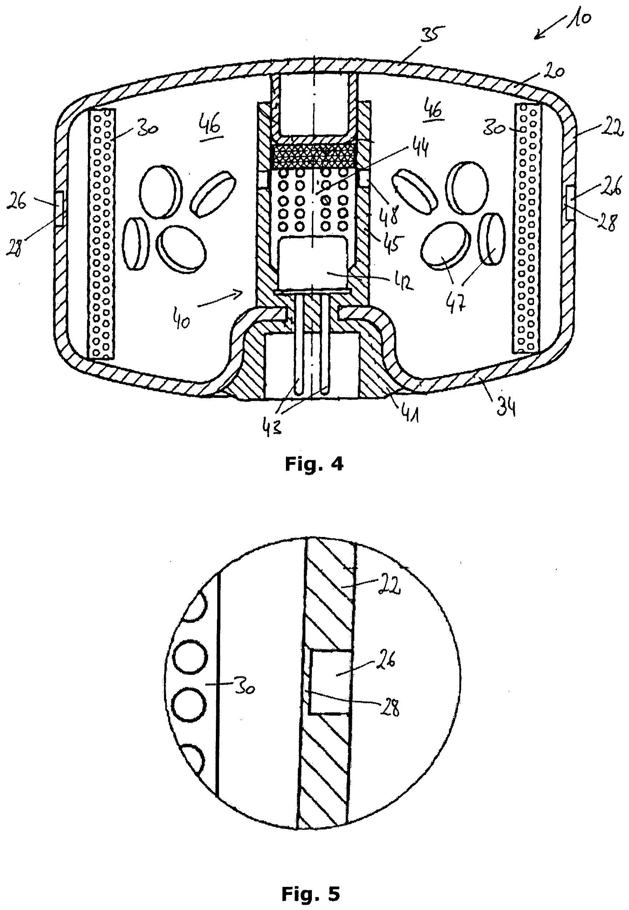

Konkret ist in Figur 1a eine zylinderförmige Umfangswandung 22 des Außengehäuses 20 dargestellt. Im Allgemeinen können weitere Wandelemente integral mit der Umfangswandung 22 ausgebildet sein, um so das Außengehäuse 20 zu bilden. Das Außengehäuse 20 kann beispielsweise ferner einen Boden 34 und/oder einen Deckel 35 aufweisen, wobei der Boden 34 und der Deckel 35 jeweils eine axiale Stirnfläche der zylinderförmigen Umfangswandung 22 überdecken bzw. verschließen. Ein Beispiel für ein vollständig geschlossenes Außengehäuse 20 ist in Figur 4 dargestellt.

Die Filterstruktur 30 ist durch mehrere Kanäle 21 gebildet, die sich durch die Umfangwandlung 22 erstrecken. Die Kanäle sind im Wesentlichen labyrinthartig bzw. mäanderförmig ausgebildet, so dass das durch die Umfangswandung 22 strömende Gas einen relativ weiten Weg zurücklegt. Der Verlauf des Gasstromes ist beispielshaft in Figur 1b durch entsprechende Pfeile dargestellt.

Die Kanäle 21 sind durch ineinandergreifende Rippen 33 begrenzt, die in unterschiedlichen Bauelementen der Umfangswandung 22 angeordnet sind. So weist die Umfangswandung 22 mehrere Plattenelemente 23 auf, die sich über den Außenumfang der Umfangswandung 22 erstrecken. Die Plattenelemente 23 sind gewölbt, so dass sich eine insgesamt glatte, zylinderförmige äußere Umfangsfläche der Umfangswandung 22 ergibt. Auf ihrer Innenfläche 31 weisen die Plattenelemente 23 Rippen 33 auf. Die Rippen 33 umfassen jeweils ein im Wesentlichen rechteckiges Querschnittsprofil und erstrecken sich über die gesamte Höhe des Plattenelements 23. Den äußeren Plattenelementen 23 gegenüberliegend sind innere Plattenelemente 23 vorgesehen, die im Unterschied zu den äußeren Plattenelementen 23 gegenläufig gekrümmt sind. Insbesondere weisen die inneren Plattenelemente 23 eine plane Außenfläche 25 auf, die derart gewölbt ist, dass sich insgesamt eine zylinderförmige innere Umfangsfläche der Umfangswandung 22 ergibt. Auf ihrer Innenfläche 31 umfassen die inneren Plattenelemente 23 ebenfalls Rippen 33. Die inneren und äußeren Plattenelemente 23 sind derart zueinander angeordnet, dass sich ihre Rippen 33 gegenüberliegen. Insbesondere fluchten die Rippen 33 zueinander. Dies gilt insbesondere in radialer Richtung bezogen auf den Mittelpunkt der Umfangswandung 22.

Zwischen den Plattenelementen 23, insbesondere zwischen deren Innenflächen 31, sind ferner Stegelemente 24 in die Umfangswandung 22 integriert. Die Stegelemente 24 weisen eine beidseitige Rippenstruktur 32 auf. Die Rippenstruktur 32 ist komplementär zu der Anordnung der Rippen 33 der Plattenelemente 23 ausgebildet. Die Rippen 33 der Plattenelemente 23 greifen so in die Rippenstruktur 32 ein. Dabei ist der Eingriff der Rippen 33 in die Rippenstruktur 32 derart gewählt, dass sich zwischen der Rippenstruktur 32 und den darin eingreifenden Rippen 33 ein Spalt bildet. Der Spalt weist vorzugsweise eine konstante Breite auf und bildet einen Strömungskanal bzw. den Kanal 21 zur Durchströmung von Gas. Sowohl die Rippen 33, als auch die Rippenstruktur 32 erstrecken sich über die gesamte Höhe der Umfangswandung 22 bzw. über die gesamte Höhe eines Ringsegments 27 der Umfangswandung 22.

Die Umfangswandung 22 kann aus mehreren Ringsegmenten 27 aufgebaut sein, die übereinander angeordnet und fest miteinander verbunden sind. Die Ringsegmente 27 können einstückig miteinander verbunden sein. Mit anderen Worten kann die Umfangswandung 22 einstückig ausgebildet sein. Jedenfalls sind zwischen einzelnen Ringsegmenten 27 Trennböden in Form von Ringplatten 36 vorgesehen, die die Kanäle 21 in Längsrichtung der Umfangswandung 22 unterteilen. In Figur la ist eine die Umfangswandung 22 abschließende Ringplatte 36 dargestellt. Derartige Ringplatten 36 sind vorzugsweise auch zwischen den einzelnen Ringsegmenten 27 angeordnet bzw. ausgebildet.

Ferner ist in Figur 1a erkennbar, dass die Umfangswandung 22 mehrere fensterartige Gasaustrittsöffnungen 26 aufweist. Die Gasaustrittsöffnungen 26 sind vorzugsweise in den Plattenelementen 23 ausgebildet bzw. zwischen den Plattenelementen 23 vorgesehen. Im Allgemeinen erstrecken sich die Gasaustrittsöffnungen 26 vollständig durch die Umfangswandung 22. Um einen direkten Gasstrom durch die Gasaustrittsöffnungen 26 zu verhindern, sind die Stegelemente 24 mit der Rippenstruktur 32 derart versetzt zu den Plattenelementen 23 angeordnet, dass die Stegelemente 24 die Gasaustrittsöffnungen 26 verschließen bzw. sich durch die Gasaustrittsöffnungen 26 erstrecken. Dadurch wird das ausströmende Gas gezwungen, sich durch die Kanäle 21 zu winden, bevor es über die Gasaustrittsöffnungen 26 das Außengehäuse 20 bzw. den Gasgenerator 10 verlässt.

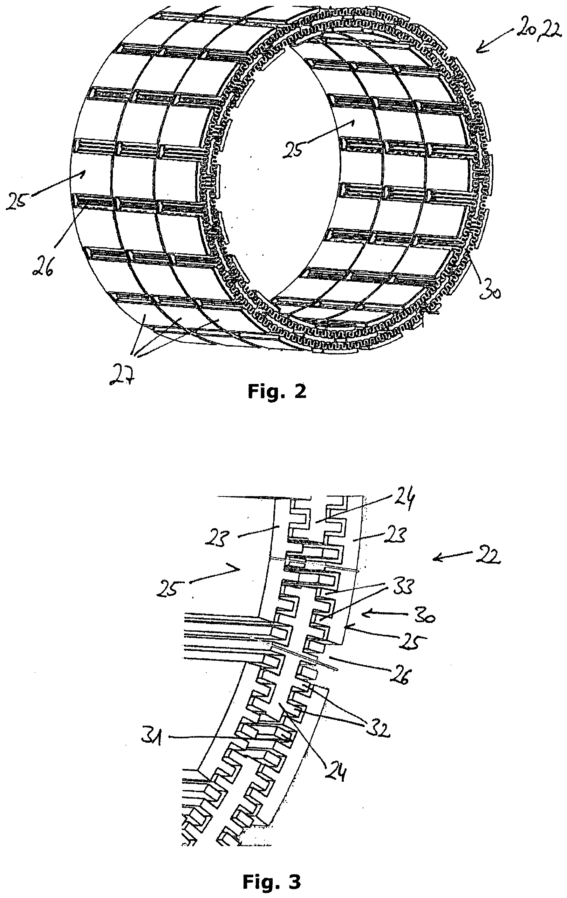

In Figur 2 ist eine weitere perspektivische Ansicht des Außengehäuses 20 gezeigt, wobei die obere Ringplatte 36 entfernt ist. Gut erkennbar ist die Filterstruktur 30, die durch mehrere, mäanderförmig angeordnete Kanäle 21 gebildet ist. Insbesondere ist erkennbar, dass die Umfangwandung 22 mehrere Plattenelemente 23 aufweist, zwischen welchen sich Stegelemente 24 erstrecken. Die Plattenelemente 23 und die Stegelemente 24 umfassen jeweils Rippen 33 bzw. eine Rippenstruktur 32, die ineinandergreifen und so die Kanäle 21 bilden.

Figur 3 zeigt eine Detailansicht des Außengehäuses 20 gemäß Figur 2, ebenfalls in perspektivischer Darstellung. In Figur 3 ist gut erkennbar, dass sich die Stegelemente 24 quer durch die Gasaustrittsöffnungen 26 erstrecken und so einen direkten Ausströmpfad für das Gas blockieren. Das ausströmende Gas wird vielmehr gezwungen, sich durch die mäanderförmig angeordneten Kanäle 21 zu bewegen. Wegen der auf diese Weise bereitgestellten, größeren Oberfläche, die das Gas überstreicht, wird ein besonders guter Wärmeaustausch erreicht. Das Gas wird dabei gekühlt. Außerdem bewirken die mäanderförmig angeordneten Kanäle 21 eine Filterung von Partikeln und/oder Schlacke aus dem Gas, so dass aus den Gasaustrittsöffnungen 26 schlussendlich gereinigtes und abgekühltes Gas ausströmt.

Figur 4 zeigt eine Querschnittsansicht eines Gasgenerators 10 mit einem Außengehäuse 20. Das Außengehäuse 20 weist eine Umfangwandung 22 sowie einen Deckel 35 und einen Boden 34 auf. In dem Boden 34 ist eine Anzündeinheit 40 integriert bzw. eingespritzt. Die Anzündeinheit 40 weist einen Zünder 42 auf, der elektrische Kontaktstifte 43 umfasst. Die elektrischen Kontaktstifte 43 strecken sich aus dem Außengehäuse heraus und sind von einem Isolationskörper 41 ummantelt. Der Zünder 42 ist gemeinsam mit den Kontaktstiften 43 insbesondere in einen Kunststoffsockel 56 eingebettet. Die Einbettung des Zünders 42 mit den Kontaktstiften 43 erfolgt vorzugsweise durch Umspritzen des Zünders 42 und der Kontaktstifte 43 mit einem Kunststoffmaterial. Beim Umspritzen wird gleichzeitig die Anzündeinheit 40 mit dem Außengehäuse 20 verbunden, insbesondere formschlüssig.

Der Zünder 42 erstreckt sich in eine Zündkammer 44, in der eine Zündladung angeordnet sein kann. Die Zündkammer 44 ist durch ein Innengehäuse 45 von einer Brennkammer 46 getrennt. Die Brennkammer 46 ist im Wesentlichen durch den Innenraum des Außengehäuses 20 gebildet. In der Brennkammer 46 kann eine Filterstruktur 30 angeordnet sein. Bei der Darstellung gemäß Figur 4 ist die Filterstruktur 30 separat von dem Außengehäuse 20 ausgebildet. Es ist auch möglich, die Filterstruktur 30 in das Außengehäuse 20 zu integrieren, wie beispielsweise in den Figuren la bis 3 gezeigt ist.

In der Brennkammer 46 ist vorzugsweise ein Treibstoff angeordnet, der in Figur 4 durch einzelne Tabletten 47 angedeutet ist. Zum Auslösen des Gasgenerators wird ein elektrisches Signal auf den Zünder 42 gegeben, der daraufhin eine in der Zündkammer 44 angeordnete Zündladung entzündet. Dabei entsteht ein Gas, das über im Innengehäuse 45 angeordnete Zündkammeröffnungen 48 in die Brennkammer 46 gelangt. Dort wird der Treibstoff entzündet und weiteres Gas erzeugt, dass durch die Filterstruktur 30 gefiltert wird und nunmehr auf das Außengehäuse 20 unter Druck einwirkt.

Um das im Gasgenerator 10 erzeugte Gas abgeben zu können, beispielsweise an einen Gassack, weist das Außengehäuse 20 ferner Gasaustrittsöffnungen 26 auf. Die Gasaustrittsöffnungen 26 sind vorzugsweise in der Umfangswandung 22 ausgebildet. Die Gasaustrittsöffnungen 26 sind zunächst durch eine Verdämmung 28 verschlossen, um den in der Brennkammer 46 angeordneten Treibstoff vor Feuchtigkeit oder sonstigen Umwelteinflüssen zu schützen. Um das Gas freizusetzen, ist es zweckmäßig, die Verdämmung 28 zu entfernen bzw. zu beseitigen. Dies erfolgt üblicherweise durch Zerstörung der Verdämmung 28.

Bei aus der Praxis bisher bekannten Gasgeneratoren ist die Verdämmung 28 durch einen Folie gebildet, die auf die Gasaustrittsöffnungen 26 aufgebracht ist. Die Folie reißt unter dem Einfluss des Gasdrucks und gibt so die Gasaustrittsöffnungen 26 frei. Bei dem Ausführungsbeispiel gemäß Figuren 4 und 5, wobei Figur 5 eine Detailansicht der Gasaustrittsöffnung 26 zeigt, ist hingegen vorgesehen, die Verdämmung 28 integral mit der Umfangswandung 22 auszubilden. Die Gasaustrittsöffnung 26 bzw. die Verdämmung 28 sind vorzugsweise durch einen Bereich der Umfangswandung 22 gebildet, der eine verringerte Wandstärke aufweist. Im Bereich einer Gasaustrittsöffnung 26 weist die Umfangswandung 22 also eine stark reduzierte Wandstärke auf, wobei die Wandstärke im Bereich der Gasaustrittsöffnung 6 derart bemessen ist, dass die Umfangswandung 22 im Bereich der Gasaustrittsöffnung 26 zerreißt, sobald das Gas in der Brennkammer 26 einen ausreichend hohen Druck erzeugt. Mit anderen Worten ist die Verdämmung 28 durch die Umfangswandung 22 selbst gebildet, wobei die Umfangswandung 22 im Bereich der Gasaustrittsöffnung 26 eine Wandstärke aufweist, die kleiner als außerhalb der Gasaustrittsöffnung 26 ist. Insbesondere weist die Umfangswandung 22 außerhalb der Gasaustrittsöffnung 26 eine druckstabile und innerhalb der Gasaustrittsöffnung 26 eine druckempfindliche Wandstärke auf.

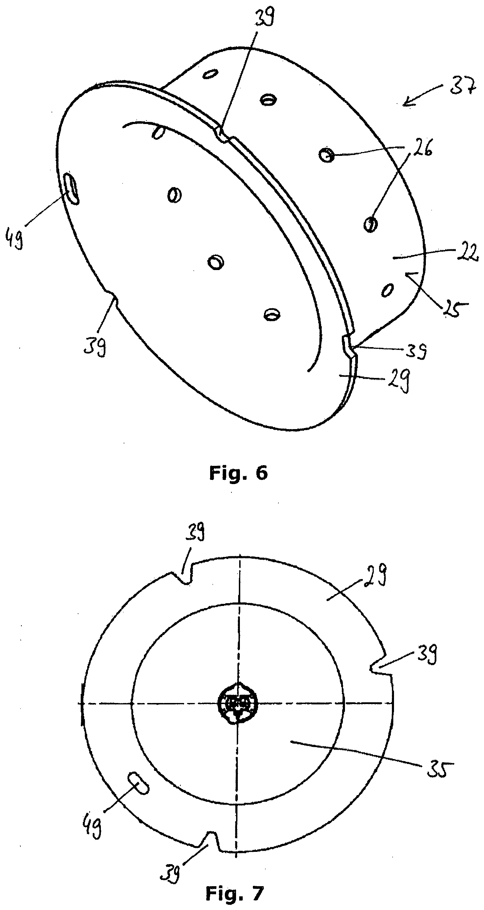

Das Außengehäuse 20 des Gasgenerators 10 kann, wie in Figur 4 beispielhaft gezeigt ist, einstückig ausgebildet sein. Alternativ ist es möglich, das Außengehäuse 20 mehrteilig, insbesondere zweiteilig auszubilden. Ein Oberteil 37 des Außengehäuses kann die Umfangswandung 22 und den Deckel 35 umfassen und ein Unterteil 38 den Boden 34 bilden. Figur 6 zeigt ein Ausführungsbeispiel eines Oberteils 37 eines Außengehäuses 20. Das Oberteil 37 umfasst eine Umfangwandung 22 mit Gasaustrittsöffnungen 26 und einen Deckel 35. Die Gasaustrittsöffnungen 26 können durch eine in die Umfangwandung 22 integrierte Verdämmung 28 verschlossen sein. Die Verdämmung 28 kann insbesondere einstückig mit der Umfangswandung 22 ausgebildet sein, wie in den Figuren 4 und 5 dargestellt ist. Ferner kann vorgesehen sein, dass das Außengehäuse 20, insbesondere die Umfangswandung 22, eine integrierte Filterstruktur 30 analog zu dem Ausführungsbeispiel gemäß Figuren la bis 3 aufweist.

Das Oberteil 37 gemäß Figur 6 umfasst außerdem einen Halteflansch 29, der sich ringförmig an die Umfangswandung 22 anschließt. Der Halteflansch 29 erstreckt sich bezogen auf die Längsachse der Umfangswandung 22 radial nach außen. Insgesamt ist das Oberteil 37 des Außengehäuses 20 hutförmig ausgebildet bzw. weist ein hutförmiges Querschnittsprofil auf. Der Halteflansch 29 dient zur Befestigung des Außengehäuses 20 bzw. des Gasgenerators 10 in einem Gassackmodul.

Figur 7 zeigt eine Unteransicht des Oberteils 37 gemäß Figur 6. Es ist erkennbar, dass das Oberteil 37 im Halteflansch 29 mehrere Kerben 39 aufweist. Die Kerben 39 sind im Wesentlichen v-förmig ausgebildet und unregelmäßig um den Umfang des Halteflansches 29 verteilt. Die Kerben 39 dienen zur Ausrichtung des Oberteils 37 bzw. des gesamten Gasgenerators 10 bei der Befestigung. So ist sichergestellt, dass der Gasgenerator 10 in der richtigen Orientierung montierbar ist. Ferner weist der Halteflansch 29 ein Langloch 4 auf, das beispielsweise zur Schraubfixierung des Gasgenerators 10 dient.

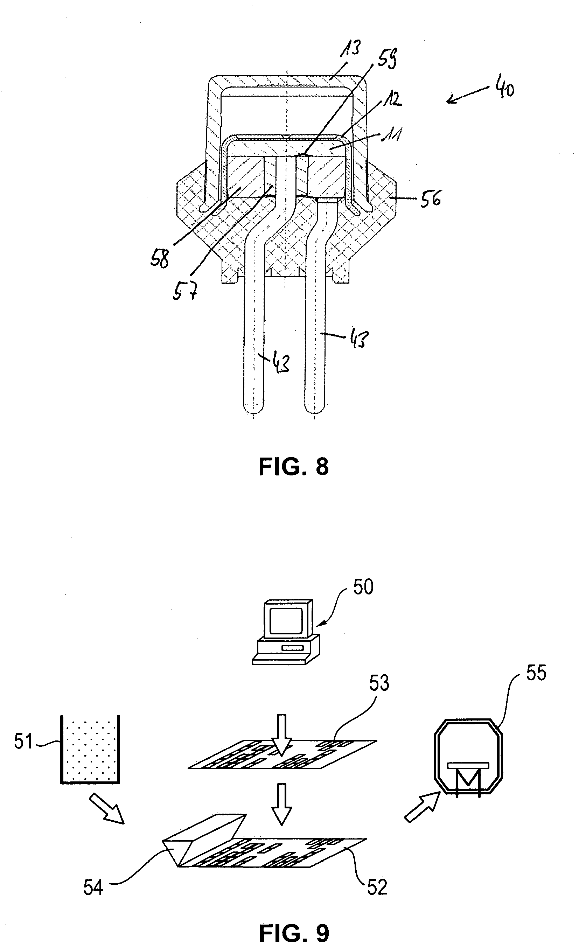

In Figur 8 ist eine Querschnittsansicht einer Anzündeinheit 40 gezeigt, die in Verbindung mit einem der Außengehäuse 20 gemäß Figuren 1a bis 7 einen Gasgenerator 10 bilden kann. Insbesondere zeigt Figur 8 einen Zünder 42 der Anzündeinheit 40. Der Zünder 42 weist 2 Kontaktstifte 43 auf, die in einen Isolationskörper 41 eingebettet sind. Der Isolationskörper 41 kann mehrere Elemente umfassen. Insbesondere kann der Isolationskörper 41 einen Kunststoffsockel 56 aufweisen, der den gesamten Zünder 42 umgibt. Zusätzlich kann der Isolationskörper 41 eine Druckverglasung 57 umfassen, die zwischen den einzelnen Kontaktstiften 43 und einem Metallring 48 angeordnet ist, um die Kontaktstifte 43 und den Metallring 58 voneinander elektrisch zu isolieren. Vorzugsweise ist einer der Kontaktstifte 43 unmittelbar mit dem Metallring 58 verbunden, wobei der Metallring 58 durch die Druckverglasung 57 von dem anderen Kontaktstift 43 isoliert ist. Eine elektrische Verbindung zwischen dem Metallring 58 und einem Kontaktstift 43 ist dennoch mittels eines Brückendrahts 59 vorgesehen, der bei Aktivierung glüht und so eine Pyrotechnikladung 11 zündet, die unterhalb einer ersten Kappe 12 angeordnet ist. Über die erste Kappe 12 erstreckt sich eine zweite Kappe 13 mit einem Abstand zur ersten Kappe 12. Der Freiraum zwischen der ersten Kappe 12 und der zweiten Kappe 13 kann durch die Zündkammer 44 gebildet sein und entsprechend eine Zündladung aufnehmen.

In Figur 9 ist schematisch ein bevorzugtes Herstellungsverfahren für das Außengehäuse 20 eines Gasgenerators 10 gezeigt. Bei dem bevorzugten Herstellungsverfahren handelt es sich um ein 3D-Druckverfahren, das eine besonders einfache und schnelle Herstellung, auch komplexer Strukturen ermöglicht.

Das 3D-Druckverfahren ist vorzugsweise als 3D-Siebdruckverfahren ausgebildet. Ausgangsmaterial für das 3D-Druckverfahren ist ein Materialpulver, das vorzugsweise als Suspension vorliegt. Die Suspension umfasst einerseits das Materialpulver und andererseits ein Bindemittel, wobei das Bindemittel in flüssiger Form vorliegen kann. Durch Mischung des Bindemittels mit dem Materialpulver ergibt sich eine Suspension, die über eine Maske auf ein Substrat bzw. eine darunterliegende, bereits gedruckte Schicht, abgetragen wird. Als Materialpulver kann sowohl ein Metallpulver, als auch ein Kunststoffpulver eingesetzt werden. Andere Materialpulver sind möglich, insbesondere ist es denkbar, Quarzsandpulver zu verwenden, um schließlich ein 3D-Druckteil aus Glas herzustellen.

Das Herstellungsverfahren beginnt mit der Herstellung eines Gemisches aus Materialpulver und Bindemittel. Die Suspension aus Materialpulver und Bindemittel wird anschließend schichtweise mittels Siebdruck aufgetragen. Dadurch entstehen räumliche Strukturen. Schließlich wird das gedruckte Bauteil einer Wärmebehandlung unterzogen.

Als Materialpulver kommen vorzugsweise Metallpulver zum Einsatz, wobei insbesondere Edelstähle, Kupfer, Titan, Hartmetalle und allgemein Leichtmetalle und Sintermetalle eingesetzt werden können.

Bei dem bevorzugten dreidimensionalen Siebdruckverfahren wird die Siebdruckmaske 52 vorzugsweise unmittelbar aus einen CAD-Modell 53 erstellt, wobei das CAD-Modell 53 an einem CAD-Rechner 50 erzeugt wird. Auf die Siebdruckmaske 52 wird mit Hilfe eines Rakels 54 unter Einfluss von Druck eine druckfähige Masse aus Bindemittel und Materialpulver aufgetragen. Vorzugsweise weist die entsprechende Siebdruckanlage dazu einen Suspensionsspeicher 51 auf, aus dem die Suspension aus Materialpulver und Bindemittel unmittelbar entnommen werden kann. Durch mehrfaches Auftragen einzelner Siebdruckschichten, ggf. mit unterschiedlichen Siebdruckmasken 52, wird eine räumliche Struktur erzeugt. Diese räumliche Struktur kann beispielsweise das Außengehäuse 20 des Gasgenerators 10 bilden.

Insbesondere kann das Außengehäuse 20 eine integrierte Filterstruktur 30 aufweisen, wie in den Figuren 1a bis 3 beispielhaft gezeigt ist. Es ist auch möglich, dass alternativ oder zusätzlich das Außengehäuse 20 eine Umfangswandung 22 aufweist, die eine einstückig integrierte Verdämmung 28 umfasst (Figuren 4 und 5). Außerdem kann die im Siebdruckverfahren hergestellte dreidimensionale Struktur ein Oberteil 37 eines Außengehäuses 20 mit einem einstückig ausgebildeten Halteflansch 29 bilden. Schließlich ist es auch möglich, durch das Siebdruckverfahren eine dreidimensionale Struktur zu erzeugen, die eine Anzündeinheit 40 bildet. Bei der Anzündeinheit 40 können insbesondere unterschiedliche Materialpulver bzw. unterschiedliche Suspensionen aus Materialpulver und Bindemittel eingesetzt werden, um sowohl die Metallstrukturen, die elektrisch leitend sind, als auch den Isolationskörper 41 gleichzeitig herzustellen. Sowohl der Metallring 58, als auch die Kontaktstifte 43 und die Druckverglasung 57 können durch das 3D-Siebdruckverfahren hergestellt werden. Das Siebdruckverfahren kann also mit mehreren Werkstoffen, beispielsweise Metall und Glas, gleichzeitig durchgeführt werden. In diesem Fall ist die Druckverglasung 57 keine reine Druckverglasung, sondern ein durch das 3D-hergestelltes Glasteil.

Nach dem schichtweisen Aufbau der räumlichen Struktur durch das Siebdruckverfahren erfolgt eine Wärmebehandlung mittels einer Wärmequelle 55, um das hergestellte Bauteil, beispielsweise das Außengehäuse 20 und/oder einen Polkörper umfassend den Metallring 58 die (Druck)-Verglasung 57 und die Kontaktstifte 43, auszuhärten bzw. strukturell zu festigen.

Im Allgemeinen wird darauf hingewiesen, dass das hier beschriebene 3D-Druckverfahren, insbesondere das dreidimensionale Siebdruckverfahren, zur Herstellung des Außengehäuses 20 gemäß Figuren 1 bis 7 und zur Herstellung der Anzündeinheit gemäß Figur 8 einsetzbar ist. Insbesondere das Ausführungsbeispiel gemäß Figuren 1a bis 3, aber auch das Ausführungsbeispiel gemäß Figuren 4 und 5, werden in der vorliegenden Anmeldung auch losgelöst von dem Herstellungsverfahren offenbart. Mit anderen Worten ist das Außengehäuse 20 gemäß Figuren 1a bis 3 sowohl konventionell, beispielsweise über ein spanendes Verfahren und/oder ein Gussverfahren, als auch mittels des 3D-Siebdruckverfahrens herstellbar. Dasselbe gilt für das Außengehäuse 20 gemäß Figuren 4 und 5, das einerseits über ein spanendes Verfahren und/oder ein Gussverfahren, vorzugsweise jedoch durch das 3D-Siebdruckverfahren hergestellt ist, das im Rahmen der Anmeldung ebenfalls beschrieben ist.

### Bezugszeichenliste:

- 10: Gasgenerator
- 11: Pyrotechnikladung
- 12: erste Kappe
- 13: zweite Kappe
- 20: Außengehäuse
- 21: Kanal
- 22: Umfangswandung
- 23: Plattenelement
- 24: Stegelement
- 25: Außenfläche
- 26: Gasaustrittsöffnung
- 27: Ringsegment
- 28: Verdämmung
- 29: Halteflansch
- 30: Filterstruktur
- 31: Innenfläche
- 32: Rippenstruktur
- 33: Rippe
- 34: Boden
- 35: Deckel
- 36: Ringplatte
- 37: Oberteil
- 38: Unterteil
- 39: Kerbe
- 40: Anzündeinheit
- 41: Isolationskörper
- 42: Zünder
- 43: Kontaktstift
- 44: Zündkammer
- 45: Innengehäuse
- 46: Brennkammer
- 47: Tablette
- 48: Zündkammeröffnung
- 49: Langloch
- 50: CAD-Rechner
- 51: Suspensionsspeicher
- 52: Siebdruckmaske
- 53: CAD-Modell
- 54: Rakel
- 55: Wärmequelle
- 56: Kunststoffsockel
- 57: Druckverglasung
- 58: Metallring
- 59: Brückendraht

## Patentansprüche

1. Gasgenerator (10) für ein Fahrzeuginsassensicherheitssystem mit einem Außengehäuse (20) und einer Filterstruktur (30) zur Reinigung und/oder Abkühlung eines innerhalb des Außengehäuses (20) freigesetzten Gases, wobei die Filterstruktur (30) in das Außengehäuse (20) integriert ist, **dadurch gekennzeichnet, dass** das Außengehäuse (20) eine zylinderförmige und/oder polygonförmige Umfangswandung (22) aufweist, in der die Filterstruktur (30) ausgebildet ist, wobei die Umfangswandung (22) gegenüberliegend angeordnete Plattenelemente (23) mit einer planen Außenfläche (25) und einer gerippten Innenfläche (31) aufweist, wobei die gerippten Innenflächen (31) jeweils einander zugewandt sind.

2. Gasgenerator (10) nach Anspruch 1,
**dadurch gekennzeichnet, dass**
die Filterstruktur (30) Kanäle (21), insbesondere labyrinthartige oder mäanderförmige Kanäle (21), aufweist, die sich durch das Außengehäuse (20) erstrecken.

3. Gasgenerator (10) nach Anspruch 1 oder 2,
**dadurch gekennzeichnet, dass**
die Umfangswandung (22) Stegelemente (24) mit beidseitiger Rippenstruktur (32) aufweist, die zwischen den gerippten Innenflächen (31) der Plattenelemente (32) angeordnet sind.

4. Gasgenerator (10) nach Anspruch 3
**dadurch gekennzeichnet, dass**
die Stegelemente (24) in Umfangsrichtung versetzt zu den Plattenelementen (23) angeordnet sind und sich jeweils durch Gasaustrittsöffnungen (26) der Umfangswandung (22) erstrecken.

5. Gasgenerator (10) nach Anspruch 3 oder 4,
**dadurch gekennzeichnet, dass**
die Rippenstruktur (32) der Stegelemente (24) zahnstangenartig in die gerippten Innenflächen (31) der Plattenelemente (23) eingreift derart, dass einzelne Rippen (33) der Stegelemente (24) und der Plattenelemente (23) durch freigesetztes Gas umströmbar sind, wobei vorzugsweise das Außengehäuse (20) mehrere Ringsegmente (27) aufweist, die koaxial übereinander angeordnet die Umfangswandung (22) bilden.

6. Gasgenerator (10), nach einem der vorhergehenden Ansprüche, mit einem Außengehäuse (20), das Gasaustrittsöffnungen (26) aufweist, die durch eine Verdämmung (28) verschlossen sind,
**dadurch gekennzeichnet, dass**
die Verdämmung (28) einstückig mit dem Außengehäuse (20) ausgebildet ist, wobei insbesondere die Verdämmung (28) durch einen Bereich verringerter Wandstärke der Umfangswandung (22) gebildet ist.

7. Gasgenerator (10) nach einem der vorhergehenden Ansprüche,
**gekennzeichnet dadurch, dass** das Außengehäuse (20) des Gasgenerators (10), durch ein 3D-Druckverfahren, insbesondere ein 3D-Siebdruckverfahren, hergestellt ist, wobei die Filterstruktur (30) einstückig mit dem Außengehäuse (20) durch das 3D-Druckverfahren hergestellt ist.

8. Gasgenerator (10) nach Anspruch 7,
**gekennzeichnet dadurch, dass** eine Anzündeinheit (40) des Gasgenerators (10), durch das 3D-Druckverfahren, insbesondere das 3D-Siebdruckverfahren, hergestellt ist, wobei vorzugsweise ein Halteflansch (29) einstückig mit dem Außengehäuse (20) durch das 3D-Druckverfahren hergestellt ist.

9. Gassackmodul, insbesondere Airbagmodul, mit einem Gasgenerator (10) nach einem der vorhergehenden Ansprüche.

10. Fahrzeuginsassensicherheitssystem mit einem Gasgenerator (10) nach einem der vorhergehenden Ansprüche 1 bis 8 und/oder einem Gassackmodul nach Anspruch 9.

11. Verfahren zur Herstellung einer Gasgeneratorkomponente eines Gasgenerators (10) nach einem der vorhergehenden Ansprüche 1 bis 8, bei dem die Gasgeneratorkomponente als ein Außengehäuse (20) des Gasgenerators (10), mittels eines 3D-Druckverfahrens schichtweise aufgebaut wird, wobei vorzugsweise das 3D-Druckverfahren ein 3D-Siebdruckverfahren ist.

12. Verfahren zur Herstellung einer Gasgeneratorkomponente nach Anspruch 11, bei dem als eine weitere Gasgeneratorkomponente eine Anzündeinheit (40) des Gasgenerators (10), mittels eines 3D-Druckverfahrens schichtweise aufgebaut wird, wobei vorzugsweise das 3D-Druckverfahren ein 3D-Siebdruckverfahren ist.

13. Verfahren nach Anspruch 11 oder 12,
**gekennzeichnet durch** die folgenden Schritte:
- Bereitstellen einer Siebdruckmaske (52);
- Aufbringen einer druckfähigen Suspension eines Materialpulvers auf die Siebdruckmaske (52), wobei das Aufbringen insbesondere unter Druck erfolgt; und
- Erhitzen der druckfähigen Suspension zur Verschmelzung des Materialpulvers.

14. Verfahren nach Anspruch 13,
**dadurch gekennzeichnet, dass**
die Siebdruckmaske (52) automatisch auf Grundlage eines Computermodells erzeugt wird.

15. Verfahren nach einem der Ansprüche 11 bis 14,
**dadurch gekennzeichnet, dass**
wenigstens zwei voneinander verschiedene Materialpulver auf die Siebdruckmaske (52) aufgebracht werden, derart, dass zwei Bauteile der Gasgeneratorkomponente, die voneinander verschiedene Materialien aufweisen, in einem gemeinsamen Verfahrensschritt hergestellt werden.

16. Verfahren nach Anspruch 15,
**dadurch gekennzeichnet, dass**
die unterschiedlichen Materialpulver ein Metallpulver zur Herstellung elektrisch leitfähiger Bauteile einerseits und ein Quarzsandpulver oder Kunststoffpulver zur Herstellung eines Isolationskörpers (41) andererseits sind.

## Claims

1. An inflator (10) for a vehicle occupant safety system comprising an outer casing (20) and a filter structure (30) for purifying and/or cooling gas released inside the outer casing (20), wherein the filter structure (30) is integrated in the outer casing (20),
**characterized in that** the outer casing (20) includes a cylindrical and/or polygonal circumferential wall (22) in which the filter structure (30) is configured, wherein the circumferential wall (22) comprises opposed plate elements (23) having a planar outer surface (25) and a corrugated inner surface (31), the corrugated inner surfaces (31) facing each other.

2. The inflator (10) according to claim 1,
**characterized in that**
the filter structure (30) includes channels (21), especially labyrinth-shaped or meandering channels (21), extending across the outer casing (20).

3. The inflator (10) according to claim 1 or 2,
**characterized in that**
the circumferential wall (22) includes web elements (24) having a rib structure (32) on both sides which are disposed between the corrugated inner surfaces (31) of the plate elements (32).

4. The inflator (10) according to claim 3,
**characterized in that**
the web elements (24) are arranged to be offset against the plate elements (23) in the circumferential direction and extend through respective gas outlet openings (26) of the circumferential wall (22).

5. The inflator (10) according to claim 3 or 4,
**characterized in that**
the rib structure (32) of the web elements (24) engages in a rack manner in the corrugated inner surfaces (31) of the plate elements (23) so that released gas can flow around individual ribs (33) of the web elements (24) and of the plate elements (23), wherein preferably the outer casing (20) includes plural ring segments (27) forming, when being coaxially superimposed, the circumferential wall (22).

6. The inflator (10) according to any one of the preceding claims, comprising an outer casing (20) including gas outlet openings (26) which are closed by a plugging (28),
**characterized in that**
the plugging (28) is formed integrally with the outer casing (20), wherein especially the plugging (28) is formed by an area of reduced wall thickness of the circumferential wall (22).

7. The inflator (10) according to any one of the preceding claims,
**characterized in that** the outer casing (20) of the inflator (10) is produced by a 3D printing method, especially a 3D screen printing method, the filter structure (30) being produced integrally with the outer casing (20) by the 3D printing method.

8. The inflator (10) according to claim 7,
**characterized in that** an ignition unit (40) of the inflator (10) is produced by the 3D printing method, especially the 3D screen printing method, wherein preferably a retaining flange (29) is produced integrally with the outer casing (20) by the 3D printing method.

9. An airbag module comprising an inflator (10) according to any one of the preceding claims.

10. A vehicle occupant safety system comprising an inflator (10) according to any one of the preceding claims 1 to 8 and/or an airbag module according to claim 9.

11. A method of producing an inflator component of an inflator (10) according to any one of the preceding claims 1 to 8, in which the inflator component is structured in layers as an outer casing (20) of the inflator (10) by means of a 3D printing method, said 3D printing method preferably being a 3D screen printing method.

12. A method of producing an inflator component according to claim 11, in which an ignition unit (40) of the inflator (10) is structured in layers as a further inflator component by means of a 3D printing method, said 3D printing method preferably being a 3D screen printing method.

13. The method according to claim 11 or 12,
**characterized by** the following steps of:
- providing a screen print template (52);
- applying a printable suspension of a material powder to the screen print template (52), wherein the suspension is applied especially under pressure; and
- heating the printable suspension for fusing the material powder.

14. The method according to claim 13,
**characterized in that**
the screen print template (52) is automatically produced based on a computer model.

15. The method according to any one of the claims 11 to 14,
**characterized in that**
at least two material powders different from each other are applied to the screen print template (52) in such a way that two component parts of the inflator component including materials different from each other are produced in a joint process step.

16. The method according to claim 15,
**characterized in that**
the different material powders are, on the one hand, a metal powder for producing electrically conductive components and, on the other hand, a quartz sand powder or synthetic powder for producing an insulating member (41).

## Revendications

1. Générateur de gaz (10) pour un système de sécurité d'occupant de véhicule ayant un boîtier externe (20) et une structure filtrante (30) pour nettoyer et/ou refroidir un gaz généré à l'intérieur du boîtier externe (20), pour lequel la structure filtrante (30) est intégrée au boîtier externe (20), **caractérisé en ce que** le boîtier extérieur (20) a une paroi périphérique cylindrique et/ou polygonale (22), dans laquelle la structure filtrante (30) est formée, pour lequel la paroi périphérique (22) possède des éléments de plaque (23) disposés de manière opposée à une surface extérieure plate (25) et une surface interne nervurée (31), pour lequel les surfaces internes nervurées (31) se font face.

2. Générateur de gaz (10) selon la revendication 1,
**caractérisé en ce que**
la structure filtrante (30) possède des canaux (21), en particulier des canaux en labyrinthe ou sinueux (21), qui s'étendent à travers le boîtier extérieur (20).

3. Générateur de gaz (10) selon la revendication 1 ou 2,
**caractérisé en ce que**
la paroi périphérique (22) comporte des éléments en bande (24) à structure nervurée à double face (32), qui sont disposés entre les surfaces internes nervurées (31) des éléments en plaque (32).

4. Générateur de gaz (10) selon la revendication 3,
**caractérisé en ce que**
les éléments de bande (24) sont agencés décalés dans le sens circonférentiel par rapport aux éléments de plaque (23) sont agencés et s'étendent respectivement en direction des ouvertures de sortie de gaz (26) de la paroi périphérique (22).

5. Générateur de gaz (10) selon la revendication 3 ou 4,
**caractérisé en ce que**
la structure de nervure (32) des éléments de bande (24) s'engage en forme de crémaillère dans les surfaces internes nervurées (31) des éléments de plaque (23) de sorte que les nervures individuelles (33) des éléments de bande (24) et les éléments de plaque (23) permettent l'écoulement du gaz généré, pour lequel le boîtier extérieur (20) comportant de préférence une pluralité de segments annulaires (27), qui disposés co-axialement l'un au-dessus de l'autre forment la paroi périphérique (22).

6. Générateur de gaz (10) selon l'une quelconque des revendications précédentes, comprenant un boîtier externe (20) comportant des ouvertures de sortie de gaz (26), qui sont fermées par une barrière étanche (28),
**caractérisé en ce que**
la barrière étanche (28) est formée d'une pièce intégrée au boîtier externe (20), pour lequel en particulier la barrière étanche (28) est formée par une zone d'épaisseur de paroi réduite de la paroi périphérique (22).

7. Générateur de gaz (10) selon l'une quelconque des revendications précédentes, **caractérisé en ce que** le boîtier externe (20) du générateur de gaz (10) est fabriqué par un procédé d'impression 3D, en particulier un procédé de sérigraphie 3D, pour lequel la structure de filtre (30) est fabriquée d'une pièce intégrée au boîtier externe (20) par une méthode d'impression 3D.

8. Générateur de gaz (10) selon la revendication 7, **caractérisé en ce qu'**un allumeur(40) du générateur de gaz (10) est réalisé par un procédé d'impression en 3D, en particulier un procédé de sérigraphie en 3D, pour lequel de préférence une bride de retenue (29) est fabriquée d'une pièce avec le boîtier externe (20) par un processus d'impression 3D.

9. Module airbag, en particulier module airbag avec un générateur de gaz (10) selon l'une des revendications précédentes.

10. Système de sécurité pour occupant de véhicule avec un générateur de gaz (10) selon l'une quelconque des revendications précédentes 1 à 8 et/u un module airbag selon la revendication 9.

11. Procédé de production d'un composant de générateur de gaz d'un générateur de gaz (10) selon l'une quelconque des revendications précédentes 1 à 8, pour lequel le composant de générateur de gaz en tant que boîtier externe (20) du générateur de gaz (10) est réalisé par couches successives au moyen d'un processus d'impression 3D, pour lequel de préférence la méthode d'impression 3D est un processus de sérigraphie 3D.

12. Procédé de production d'un composant de générateur de gaz selon la revendication 11, dans lequel, en tant que composant de générateur de gaz supplémentaire, un allumeur (40) du générateur de gaz (10) est réalisé par couches successives au moyen d'un processus d'impression 3D, le procédé d'impression 3D étant de préférence un procédé de sérigraphie 3D.

13. Procédé selon les revendications 11 ou 12,
**caractérisé par** les étapes suivantes:
- fournir un masque de sérigraphie (52)
- appliquer une suspension imprimable d'un matériau en poudre sur le masque de sérigraphie (52), pour lequel l'application est notamment réalisée sous pression; et
- chauffer la suspension imprimable pour faire fondre la poudre de matériau.

14. Procédé selon la revendication 13,
**caractérisé en ce que**
le masque de sérigraphie (52) est généré automatiquement à partir d'un modèle informatique.

15. Procédé selon l'une quelconque des revendications 11 à 14,
**caractérisé en ce que**
au moins deux poudres de matériau différentes sont appliquées sur le masque de sérigraphie (52), de telle sorte que deux composants du composant générateur de gaz, qui ont des matériaux différents l'un de l'autre, sont produits dans une étape de processus commune.

16. Procédé selon la revendication 15,
**caractérisé en ce que**
les poudres de différents matériaux sont une poudre métallique destinée à produire des composants électriquement conducteur d'une part et une poudre de sable de quartz ou de poudre plastique destinée à produire un corps isolant (41) d'autre part.
